# EUROPÄISCHE PATENTSCHRIFT

(11) **EP 2 673 145 B1**
(45) Veröffentlichungstag und Bekanntmachung des Hinweises auf die Patenterteilung: **26.03.2014**
(21) Anmeldenummer: 12701980.0
(22) Anmeldetag: 21.01.2012
(51) Int. Cl.: B60B 7/04, F16D 65/78, B60B 3/10, B60B 7/00, B60B 19/10, F16D 65/847

(54) **FAHRZEUGRAD**
VEHICLE WHEEL
ROUE DE VÉHICULE

(30) Priorität: 07.02.2011 DE 102011010509
(43) Veröffentlichungstag der Anmeldung: 18.12.2013
(73) Patentinhaber: Audi AG, 85045 Ingolstadt (DE)
(72) Erfinder: SCHMID, Wolfgang, 85354 Freising (DE); KOSSIRA, Christoph, 85053 Ingolstadt (DE); MEITINGER, Karl-Heinz, 81667 München (DE)
(74) Vertreter: Engelhardt, Harald
(86) Internationale Anmeldenummer: PCT/EP2012/000268
(87) Internationale Veröffentlichungsnummer: WO 2012/107165

(56) Entgegenhaltungen:
- EP-A2- 0 145 487
- DE-A1- 3 816 415
- FR-A1- 2 699 453
- US-A1- 2009 195 053

## Beschreibung

Die Erfindung betrifft ein Fahrzeugrad, umfassend eine Felge, an der mehrere um eine Schwenkachse schwenkbar gelagerte plattenförmige Abdeckelemente zum temporären Verschließen zugeordneter felgenseitiger Durchbrechungen vorgesehen sind, wobei jedes Abdeckelement fliehkraftbedingt längs der Schwenkachse gegen die Kraft eines Rückstellelements verschiebbar und mit der Felge über ein bei der Verschiebebewegung zwangsführendes Koppelement gekoppelt ist, derart, dass das Abdeckelement zwischen einer radial inneren Offenstellung und einer radial äußeren Schließstellung verschwenkbar ist.

Die Konzeption moderner Felgen unterliegt unterschiedlichen, einander teilweise entgegenlaufenden Anforderungen. Neben einer eine einfache Herstellung ermöglichenden einfachen Felgenkontur ist eine zentrale Forderung, dass die Felge eine möglichst hohe Luftdurchströmung ermöglicht, um im Bedarfsfall die Bremsschreibe optimal über den Luftstrom kühlen zu können. Ferner muss beim Nachheizen der Bremsscheibe im Stand dafür gesorgt werden, dass die Wärme auch ohne Luftströmung abtransportiert werden kann. Hieraus resultiert die Forderung nach einer möglichst "offenen" Felgenstruktur.

Aus aerodynamischen Gründen jedoch sollte die Felge möglichst geschlossen sein, um Luftverwirbelungen, die durch die Felgendurchbrüche entstehen, möglichst zu verhindern. Im normalen Fahrbetrieb herrscht im Bereich des Unterbodens des Fahrzeugs ein Überdruck, der dafür sorgt, dass Luft durch die Freiräume der Felge gedrückt wird. Würde die Felge als geschlossene Scheibe ausgeführt, so könnte der Cw-Wert, der als Faktor in die Berechnung des Luftwiderstands des Fahrzeugs eingeht, verbessert werden.

Um diesen einerseits aus thermischen, andererseits aus aerodynamischen Gründen einander quasi widersprechenden Anforderungen gerecht zu werden, ist es bekannt, mittels beweglicher, üblicherweise schwenkbar gelagerter plattenförmiger Abdeckelemente die felgenseitigen Durchbrechungen bedarfsabhängig zu öffnen und zu schließen. Bei solchen Systemen sind die plattenförmigen Abdeckelemente zumeist schwenkgelagert und längs der Schwenkachse radial beweglich. Zur Felge hin sind die Abdeckelemente zusätzlich über jeweils ein zwangsführendes Koppelelement verbunden. Mit zunehmender Raddrehzahl nimmt die auf die Abdeckelemente wirkendes Fliehkraft immer stärker zu, was dazu führt, dass sie, ausgehend von einer radial innen liegenden Stellung, in der sie die jeweils zugeordnete Durchbrechung öffnen, radial nach außen wandern, wobei während dieser fliehkraftbedingten Radialbewegung infolge der Zwangsführung über das Koppelelement die Abdeckelemente von der Offenstellung in die Schließstellung schwenken. Diese radiale Bewegung erfolgt gegen die Kraft eines Rückstellelements, üblicherweise einer Feder, die das jeweilige Abdeckelement wieder radial nach innen drängt, jedoch aufgrund der hohen Fliehkräfte überdrückt wird. Nimmt die Raddrehzahl wieder ab, ist die Bewegung umgekehrt, die Abdeckelemente öffnen in Folge der radial nach innen erfolgenden Bewegung durch das Rückstellelement mit abnehmender Fliehkraft über das zwangsführende Koppelelement automatisch, wenn sie in ihre innen liegende Stellung überging.

Ein Fahrzeugrad der eingangs beschriebenen Art ist beispielsweise aus EP 0 145 487 A2 bekannt. Bei dem dort beschriebenen Rad ist ein temperaturgesteuertes Stellelement vorgesehen, über das die Abdeckelemente trotz höherer Fahrgeschwindigkeit und radial nach außen geschlossenen Abdeckelementen aktiv in die Offenstellung bewegt werden können, wenn die Temperatur im Radinneren, also im Bereich der Bremse, hinreichend hoch ist, so dass eine Kühlung unbedingt erforderlich ist. Dort sind als temperaturgesteuerte Stellelemente beispielsweise Formgedächtnislegierungen oder Bimetallelemente beschrieben, die sich bei Erreichen einer hinreichend hohen Stelltemperatur verformen und verformungsbedingt eine Kraft auf das zugeordnete Abdeckelement aufbringen, um dieses entgegen der hohen Flieh- oder Zentripetalkraft zu überdrücken, um das Abdeckelement über das zwangsführende Koppelelement wieder zurückzudrücken. Dies setzt hohe Anforderungen an das jeweilige thermisch gesteuerte Stellelement, die folglich das entsprechende Arbeitsvermögen aufweisen müssen.

Ein diesbezüglich verbessertes Fahrzeugrad ist aus der nachveröffentlichten deutschen Patentanmeldung DE 10 2010 034 417.6 bekannt. Dort ist das zwangsführende Koppelelement gegen eine Elastizität felgenseitig und/oder abdeckelementseitig gelagert oder weist eine integrierte Elastizität auf, derart, dass die zum Bewegen eines Abdeckelements aus der Schließstellung in die Offenstellung benötigte Kraft begrenzt ist. Hieraus wird erreicht, dass die Abdeckelemente mit einem wesentlich geringeren Kraftaufwand in die Offenstellung gedrückt werden, da die benötigte Kraft über die entweder integrierte oder lagerungseitig vorgesehene Elastizität begrenzt ist. Diese Elastizität wird beispielsweise mittels einer Schraubenfeder oder mittels Gummilagerringen realisiert.

Ein Problem von Fahrzeugrädern der eingangs genannten Art ist jedoch, dass es während der Raddrehung zu ungewollten Bewegungen der Abdeckelemente kommt, die letztlich aus einer Vertikalanregung der Abdeckelemente infolge einer vertikalen Radbewegung resultieren. Wie beschrieben werden die Abdeckklappen zentripetalkraftgesteuert zwischen den Stellungen längs der Schwenkachse verschoben und über das Koppelelement dabei verschwenkt. Fährt das Fahrzeug nun auf unebener Straße, so federt das Rad ständig ein und aus, d. h., dass kontinuierlich eine eine vertikale Bewegungskomponente aufweisende Felgenbewegung gegeben ist, aus welcher wiederum Beschleunigungskräfte auf die Abdeckelemente wirken. Es sei angenommen, dass die Abdeckelemente infolge der gegebenen Zentripetalkraft alle nach außen bewegt und in die Schließstellung geschwenkt sind. Federt nun das Rad schnell und stark ein, so wird das fahrbahnnahe Abdeckelement zum Felgenrand hin beschleunigt, an seiner Stellung ändert sich nichts, da es wie angenommen bereits in der radial äußeren Schließstellung ist. Das gegenüberliegende Abdeckelement jedoch wird zum Felgeninneren hin beschleunigt, d. h., dass es bei hinreichend hoher Beschleunigung aus seiner radial äußeren Schließstellung zum Felgeninneren hin bewegt wird, verbunden mit einer Öffnung der Durchbrechung über das zwangsführende Koppelelement. Bezogen auf eine hinreichend schnelle Raddrehung und relativ starke und hochfrequente Radbewegungen kommt es folglich zu der Zentripetalkraft überlagerten Beschleunigungen respektive Schwingungen, die in ungewollten Abdeckelementbewegungen resultieren. Dies ist sowohl aus mechanischer Sicht unerwünscht, da hieraus hohe mechanische Belastungen für die Schwenk- und Kopplungslagerung resultieren, wie sich auch akustische Nachteile ergeben, da aus dem ständigen Öffnen und Schließen Geräusche resultieren. Auch optisch ist dieser Effekt nicht wünschenswert.

Aus FR 2 699 453 A1 ist ein Fahrzeugrad bekannt, das einen Hebelmechanismus aufweist, um felgenseitige Abdeckelemente zwischen einer Schließoder Offenstellung zu verschwenken. Die Hebelelemente wirken fliegkraftgesteuert.

DE 38 16 415 A1 beschreibt eine Fahrzeugbremse mit einer Luftzufuhreinrichtung. Ein die Bremse umgebendes Fahrzeugrad weist eine Tragscheibe an einem Achsteil auf, die drehfest angebracht ist, und die mindestens eine Ausnehmung aufweist, an deren benachbarte Rand ein Luftleitteil angelenkt ist. Dieses kann mit einem mit Druckmittel beaufschlagten Stellmotor oder einem schraubenfederartigen Stellelement von einer Schließstellung in eine Offenstellung ausgeschwenkt werden, worüber ein Lufteinstromkanal geöffnet wird.

Aus US 2009/195053 A1 ist schließlich eine Felge für ein Kraftfahrzeugrad bekannt, die verschließbare Belüftungsöffnungen aufweist, die im geöffneten Zustand in Axialrichtung zur Radachse durchströmbar sind. Zum Öffnen und Schließen der Belüftungsöffnungen ist eine Stelleinrichtung vorgesehen, die in Abhängigkeit einer wirkenden Beschleunigung oder Verzögerung, temperaturgesteuert oder über die Rotationsgeschwindigkeit gesteuert agieren kann.

Der Erfindung liegt damit das Problem zugrunde, ein Fahrzeugrad anzugeben, bei dem durch Radbewegungen induzierte Bewegungen der Abdeckelemente reduziert bzw. vermieden werden.

Zur Lösung dieses Problems ist bei einem Fahrzeugrad der eingangs genannten Art erfindungsgemäß vorgesehen, dass ein felgenaußenseitig angeordneter Schwenkachsstab über einen hydraulischen, pneumatischen oder reibungswirkenden Schwingungsdämpfer mit dem Abdeckelement verbunden ist.

Bei dem erfindungsgemäßen Fahrzeugrad ist ein hydraulischer oder pneumatischer Schwingungsdämpfer vorgesehen, der mit einem felgenaußenseitig angeordneten Schwenkachsstab, der also der Schwenklagerung eines Abdeckelements an der Felgenaußenseite dient, verbunden ist. Als Schwingungsdämpfer wird ein Bauteil verstanden, das eine Kraft gegen eine Geschwindigkeit aufbaut, d. h., dass je höher die auf den Dämpfer über ein mit ihm gekoppeltes Element wirkende Geschwindigkeit ist, eine umso größere gegenwirkende Kraft aufgebaut wird. Dies unterscheidet einen Schwingungsdämpfer von einer allgemeinen Elastizität, wie sie beispielsweise über eine Feder oder ein elastisches Gummibauteil oder Ähnliches realisiert wird, womit eine Kraft gegen den Weg, über den dieses Bauteil deformiert wird, aufgebaut wird. Unter den Begriff Schwingungsdämpfer fällt darüber hinaus auch ein Reibungsdämpfer, also ein Dämpfer, der durch Reibung Energie vernichtet und so die Schwingung dämpft.

Infolge der Integration eines solchen hydraulischen oder pneumatischen Schwingungsdämpfers oder Reibungsdämpfers am Abdeckelement können nun die beschriebenen ungewollten Abdeckelementbewegungen weitgehend bis nahezu vollständig reduziert werden. Federt das Rad ausgehend vom eingangs beschriebenen angenommenen Beispiel wiederum ein, so bleibt auch das von der Fahrbahn entfernte Abdeckelement in der radial nach außen bewegten Schließstellung. Denn wenngleich die beachtlich hohe Beschleunigungskraft zum Felgeninneren infolge der Radeinfederung wirkt, die das Abdeckelement mit hoher Geschwindigkeit zum Felgeninneren beschleunigen würde, baut sich über den erfindungsgemäß integrierten Schwingungsdämpfer eine ebenso hohe Gegenkraft auf, die der Beschleunigungskraft entgegenwirkt und das Abdeckelement in der radial äußeren Position hält. Je größer die auf den Schwingungsdämpfer wirkende Beschleunigung, umso größer die von ihm aufgebaute Gegenkraft.

Nachdem jedes Abdeckelement im Bereich des radial äußeren Schwenkachsstabs über einen eigenen Schwingungsdämpfer schwingungsgedämpft gelagert ist, können infolge dessen die sich aus kräftigen und schnellen Einfederbewegungen resultierenden ungewollten Bewegungen der Abdeckelemente weitestgehend bis nahezu vollständig reduziert werden. Denn die etwaigen Schwingungen werden von dem Schwingungsdämpfer kompensiert respektive weitestgehend ausgeglichen, so dass keine merklichen Abdeckelementbewegungen auftreten.

Selbstverständlich behindern die integrierten Schwingungsdämpfer nicht die üblichem Radialbewegungen der Abdeckelemente, die funktionsgemäß zentripetalkraftgesteuert erfolgen. Bei einer Beschleunigung des Fahrzeugs und zunehmender Raddrehzahl nimmt die Zentripetalkraft zu, worüber die Abdeckelemente nach außen bewegt werden. Diese radiale Bewegung nach außen wird über die integrierten Schwingungsdämpfer nicht unterbunden, sie wird allenfalls resultierend aus der Trägheit der Schwingungsdämpfer etwas verzögert. Entsprechendes gilt bei einer Verzögerung und damit Reduktion der Raddrehzahl im Bezug auf die Bewegung der Abdeckelemente nach innen. Auch diese Bewegung wird durch den Schwingungsdämpfer, der auch hierbei betätigt wird, nicht unterbunden, sondern allenfalls etwas verzögert.

Als Schwingungsdämpfer kann gemäß einer ersten Efindungsausgestaltung ein Kolben-Zylinder-Dämpfer verwendet werden. Ein solcher Dämpfer, sei er hydraulisch oder pneumatisch, beruht darauf, dass die Relativbewegung zwischen Kolben und Zylinder hydraulisch oder pneumatisch druckgesteuert erfolgt. Die Bewegung des Kolbens in den Zylinder setzt eine Verdrängung der Hydraulikflüssigkeit oder der Luft im Zylinder voraus, die Gegenbewegung erfordert wiederum das Nachströmen der Hydraulikflüssigkeit oder von Luft in den Zylinder. Hierüber kann eine effektive Schwingungsdämpfung erreicht werden. Zweckmäßigerweise ist dabei der Schwenkachsstab mit dem Kolben verbunden, d. h., der Kolben ist bevorzugt in unmittelbarer axialer Verlängerung des Schwenkachsstabs angeordnet. Der Zylinder seinerseits ist fest am Abdeckelement vorgesehen, so dass sich - da der Schwenkachsstab zwar drehgelagert ist, jedoch radial gesehen lagefest ist - bei einer Positionsänderung des Abdeckelements zwangsläufig auch eine Bewegung des Kolbens im Zylinder ergibt.

Grundsätzlich denkbar wäre natürlich auch eine umgekehrte Anordnung derart, dass der Schwenkachsstab mit dem Zylinder gekoppelt ist, mithin also der Zylinder letztlich radial gesehen lagefest ist, während der Kolben mit dem Abdeckelement gekoppelt ist. Die Funktion ist jedoch dieselbe.

Alternativ zur Verwendung eines Kolben-Zylinder-Dämpfers kann als Schwingungsdämpfer auch ein Drehdämpfer verwendet werden. Auch hier resultiert die Dämpfung aus einer bewegungsbedingten Verdrängung einer Hydraulikflüssigkeit oder von Luft, jedoch findet hier keine Linearbewegung wie im Falle eines Kolben-Zylinder-Dämpfers statt, sondern eine Rotationsbewegung, im Rahmen welcher ein Drehkörper in einem Gehäuse gedreht wird, wobei über den Drehkörper das Hydraulikfluid oder die Luft verdrängt wird.

Bevorzugt ist hier der Schwenkachsstab mit dem Drehkörper des Drehdämpfers verbunden, um die Linearbewegung des Schwenkachsstabs relativ zum Abdeckelement in einer entsprechende Drehbewegung des Drehkörpers umzulenken. Das Gehäuse, in dem der Drehkörper aufgenommen ist, wäre in diesem Fall wieder am Abdeckelement angeordnet. Gleichermaßen kann auch hier die Anordnung umgekehrt sein, d. h., dass das den Drehkörper aufnehmende Gehäuse mit dem Schwenkachsstab verbunden ist, während der Drehkörper mit dem Abdeckelement gekoppelt ist, auch hier wiederum über eine geeignete mechanische Kopplung, um die Drehung des Drehkörpers zu erwirken.

In Weiterbildung der Erfindung kann vorgesehen sein, dass bei Verwendung eines reibungswirkenden Schwingungsdämpfers an einem felgenseitig und/oder abdeckelementseitig vorgesehnen Dämpferbauteil, insbesondere einem abdeckelementseitig angeordneten Zylinder und dem felgenseitig angeordneten Schwenkachsstab ein Reibbelag vorgesehen ist. Ein verwendbarer Reibungsdämpfer weist z.B. eine abdeckelementseitige hohlzylindrische Halterung auf, in die der auch hier vorgesehene felgenseitig festliegende Schwenkachsstab eingreift, so dass auch hier über diese nach Art einer Kolben-Zylinder-Anordnung gebildete Kopplung die zweite Lagerstelle realisiert ist. In der Halterung und/oder am Schwenkachsstab ist ein Reibungsbelag vorgesehen, der entweder mit dem jeweils benachbarten Teil, relativ zu dem er sich bewegt, oder mit einem an diesem benachbarten Teil vorgesehene weiteren Reibungsbelag reibend und damit dämpfend zusammenwirkt.

Weitere Vorteile, Merkmale und Einzelheiten der Erfindung ergeben sich aus den im Folgenden beschriebenen Ausführungsbeispielen sowie anhand der Zeichnung. Dabei zeigen:
- Figur 1: eine Prinzipdarstellung eines erfindungsgemäßen Fahrzeugrads in Teilansicht mit einem Schwingungsdämpfer in Form einer Kolben-Zylinder-Einheit, wobei sich das Abdeckelement in der felgeninneren Offenstellung befindet,
- Figur 2: das Fahrzeugrad aus Figur 1 in Rotation mit in die radial äußere Schließstellung bewegten Abdeckelement, und
- Figur 3: eine Prinzipdarstellung eines erfindungsgemäßen Fahrzeugrads in Teilansicht mit einem Reibungsschwingungsdämpfer.

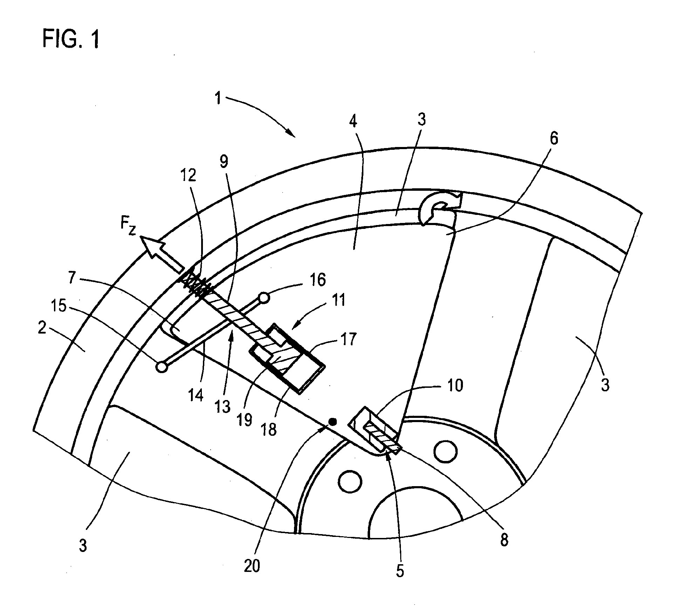

Figur 1 zeigt eine Darstellung eines Teils eines erfindungsgemäßen Fahrzeugrads 1, umfassend eine Felge 2, an der hier nicht näher gezeigt üblicherweise ein Bremstopf und eine am Bremstopf befestigte Bremsscheibe in der Montagestellung befestigt respektive zugeordnet sind. Die Felge 2 weist mehrere den Durchlüftung und Optik dienende Durchbrechungen 3 auf, denen im gezeigten Beispiel jeweils ein plattenförmiges Abdeckelement 4 zugeordnet ist, wobei in Figur 1 lediglich ein solches Abdeckelement 4 gezeigt ist. Diese Abdeckelemente 4 dienen dazu, die jeweilige Durchbrechung 3 großflächig zu verschließen und bei Bedarf zur Durchlüftung zu öffnen.

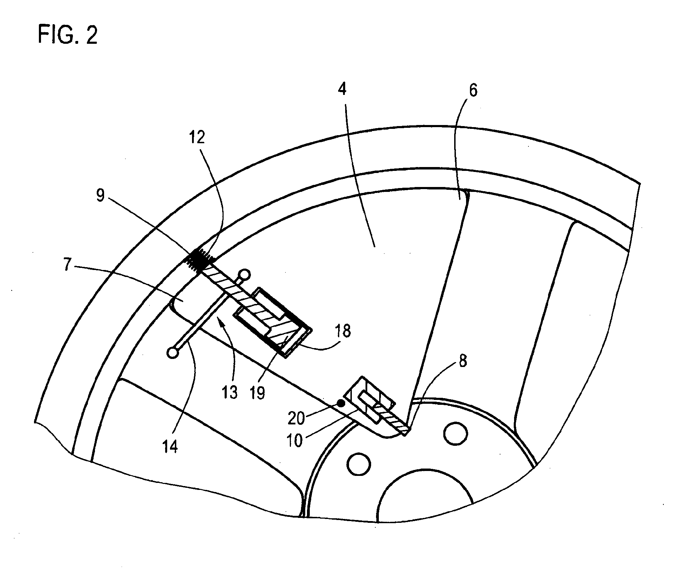

Hierzu ist das Abdeckelement 4 um eine Schwenkachse 5 um einige Winkelgrade, z. B. 5° - 10° schwenkbeweglich. Bei der Darstellung gemäß Figur 1 und 2 handelt es sich um eine Innenseitenansicht der Felge 2. Die Schwenkbeweglichkeit eines jeden Abdeckelements um die Schwenkachse 5 ist derart, dass jedes Abdeckelement 4 mit seiner in Figur 1 rechten äußeren Ecke 6 zum Felgeninneren, also aus der Zeichenebene zum Betrachter hin herausschwenkt. Die linke obere Ecke 7 entgegen schwenkt in die Zeichenebene, also vom Betrachter weg, zum Felgenäußeren. Dies ist in der in Fig. 1 gezeigten Offenstellung dargestellt, d. h., dass hier das Abdeckelement 4 in einer geöffneten Position gezeigt ist, in welcher die rechte obere Ecke 6 nach innen, also zum Betrachter hingeschwenkt ist, während die linke obere Ecke 7 nach außen, also vom Betrachter weggeschwenkt ist. Es bilden sich also Lüftungsschlitze aus.

Die Schwenklagerung ist über zwei Schwenkachsstäbe 8, 9 realisiert, wobei der Schwenkachsstab 8 in einer Halterung 10, die an der Innenseite eines jeden Abdeckelements angeordnet ist, aufgenommen ist, während der zweite, radial äußere Schwenkachsstab 9 mit einem hydraulischen oder pneumatischen Schwingungsdämpfer 11 gekoppelt ist, worauf nachfolgend noch eingegangen wird. Beide Schwenkachsstäbe 8, 9 sind lagefest an der Felge 2 in entsprechend, nicht näher gezeigten Aufnahmen fixiert.

Am radial äußeren Schwenkachsstab 9 ist ein Federelement 12 angeordnet, gegen das das jeweilige Abdeckelement 4 bewegt wird, wenn es nach außen wandert. Dieses Federelement 12 dient dazu, eine Rückstellkraft auf das Abdeckelement 4 auszuüben, wenn dieses zentripetalkraftbedingt bei einer Raddrehung nach außen wandert.

Vorgesehen ist ferner ein Koppelelement 13 hier in Form einer starren Stange 14, die an der Felge 2 sowie am Abdeckelement 4 über jeweilige Kugelgelenklagerungen 15, 16 gelagert ist, d. h. sie ist über diese Kugelgelenklagerungen 15, 16 relativ zur Felge 2 bzw. dem Abdeckelement 4 beweglich aufgenommen.

Vorgesehen ist ferner ein hier nur prinzipiell dargestelltes, vorzugsweise thermisch gesteuertes Stellelement 20, bei dem es sich beispielsweise um einen Bimetallaktor oder einen Formgedächtnislegierungsaktor oder um ein Dehnstoffarbeitselement handeln, kann. Dieses Stellelement 20 ist am Fahrzeugrad 1 vorgesehen oder dem Fahrzeugrad zugeordnet. Es kann an der Felge oder am Bremstopf angeordnet sein. Über dieses Stellelement 20 wird lokal ein Druck auf die in den Figuren gezeigte Innenseite des Abdeckelements ausgeübt. Dieser Druck dient dazu, das Abdeckelement aktiv aus einer geschlossenen Stellung in die geöffnete Stellung zu bewegen, also um die Schwenkachse 5 zu verschwenken, wenn temperaturbedingt eine Durchlüftung erforderlich ist.

Wie beschrieben ist der Schwenkachsstab 9 mit einem hydraulischen oder pneumatischen Schwingungsdämpfer 11 gekoppelt. Dieser Schwingungsdämpfer 11 ist als Kolben-Zylinder-Dämpfer 17 ausgeführt, umfassend einen Zylinder 18, der im gezeigten Beispiel fest am Abdeckelement 4 innenseitig angeordnet ist, sowie einen Kolben 19, der in dem Zylinder 18 beweglich ist. Der Kolben 19 ist mit dem Schwenkachsstab 9 direkt verbunden, d. h., dass der Schwenkachsstab 9 quasi die Kolbenstange bildet. Der Schwenkachsstab 9 greift folglich über eine abgedichtete Zuführöffnung in den Zylinder 18 ein. Der Zylinder 18 ist, je nach Ausführung des Dämpfers, mit einer Hydraulikflüssigkeit gefüllt, wenn es sich um einen hydraulischen Dämpfer handelt, oder mit Luft, wenn es sich um einen pneumatischen Dämpfer handelt. Zur Ermöglichung der Schwenkbewegung des Abdeckelements 4 ist der damit verbundene Zylinder 18 relativ zum Kolben verdrehbar, hierüber ist also die zweite Lagerstelle realisiert.

Der Schwingungsdämpfer dient der Umwandlung einer Bewegungsenergie in Wärmeenergie, wobei die von ihm erzeugte Dämpfungskraft umso größer ist, je größer die auf ihn wirkende Bewegungsenergie ist. Das typische Funktionsprinzip eines beispielsweise hydraulischen Schwingungsdämpfers besteht darin, dass bei einer axialen Bewegung des Kolbens gegenüber dem Zylinder das Hydraulikfluid, also beispielsweise ein Öl, durch enge Kanäle und Ventile im Kolben strömt. Durch den Widerstand, der dem Öl dabei entgegengebracht wird, werden Druckdifferenzen erzeugt, die über Wirkflächen die Dämpfungskräfte erzeugen. Hieraus resultiert eine Dämpfungsarbeit, die wiederum zu einer Erwärmung des Hydraulikfluids führt. Die Dämpfungswirkung hängt letztlich von der Viskosität des Hydraulikfluids ab. Die Funktionsweise eines solchen Schwingungsdämpfers, sei er pneumatisch oder hydraulisch, ist hinlänglich bekannt. Die Dämpfungseigenschaft eines solchen Schwingungsdämpfers wird nun erfindungsgemäß zur Bedämpfung ungewünschter Schwingungen und damit Bewegung der Abdeckelemente genutzt.

Figur 1 zeigt das Fahrzeugrad in der Ruhestellung bzw. bei sehr niedriger Drehzahl. Es wirkt keine bzw. eine sehr niedrige Zentripetalkraft auf die Abdeckelemente 4, die sich noch in der geöffneten Stellung befinden.

Dreht das Fahrzeugrad schneller, fährt also das Kraftfahrzeug, an dem sich das jeweilige Rad befindet, schneller, so nimmt die wirkende Zentripetalkraft zu, wie in Figur 1 mit F_{z} dargestellt ist. Dies führt dazu, dass die einzelnen Abdeckelemente 4 längs der Schwenkachse 5 radial nach außen wandern, eine radiale Längsbewegung um weniger Millimeter bis Zentimeter ist konstruktionsbedingt gegeben. Bedingt durch die über das starre Koppelelement 13 realisierte Kopplung zwischen Felge 2 und Abdeckelement 4 kommt es während dieser radialen Längsbewegung dazu, dass eine der Längsbewegung überlagerte Schwenkbewegung einsetzt, die das jeweilige Abdeckelement 4 in die Schließstellung zwingt. Das Koppelelement 13 bewirkt also eine Zwangsbewegung von der Offen- in die Schließstellung. Ersichtlich, siehe Figur 2, befindet sich das Abdeckelement 4 radial gesehen etwas weiter außen, der innere Schwenkachsstab 8 ist etwas aus der Halterung 10 gewandert, während der Kolben 19 weiter in den Zylinder 18 eingedrückt ist. Während dieser Bewegung wird Hydraulikflüssigkeit oder Luft aus dem Zylinderraum infolge der Kolbenbewegung herausgedrückt in den Raum jenseits des Kolbens. Die reine zentripetalkraftbedingte Bewegung wird hierüber etwas verzögert, wobei diese Radialbewegungen infolge der nur relativ langsam und stetig anwachsenden Beschleunigung ohnehin relativ langsam von statten geht.

In der in Figur 2 gezeigten Schließstellung liegt das rechte Eck 6 und das linke Eck 7 in der jeweils eingeschwenkten, also in der Zeichenebene liegende Position, die Durchbrechung 3 ist geschlossen. Infolge der Radialbewegung ist auch das Federelement 12 komprimiert, dieses übt eine Rückstellkraft auf das Abdeckelement 4 aus. Nimmt nun, wenn das Fahrzeug bremst, die Drehzahl wieder ab, so führt diese Rückstellkraft dazu, dass sich das jeweilige Abdeckelement 4 wieder öffnet, wenn über die Rückstellkraft die Zentripetalkraft F_{z} wieder überdrückt werden kann. Hierbei kommt es wiederum zu einer Bewegung des Kolbens 19 im Zylinder 18, der Kolben 19 wird ausgehend von der in Figur 2 eingeschobenen Stellung in die in Figur 1 gezeigte äußere Stellung bewegt, nachdem der Zylinder 18 mit dem Abdeckelement 4 nach innen wandert. Auch diese Bewegung ist etwas verzögert, da wiederum die Hydraulikflüssigkeit respektive des Gas von dem einen Zylinderraum in den anderen strömen muss. Da die Zentripetalkraft normalerweise nur langsam abgebaut wird, ist auch hier diese Verzögerung nicht nennenswert.

Kommt es jedoch in der in Figur 2 gezeigten Situation, in der das Abdeckelement aufgrund der hohen wirkenden Zentripetalkraft außen liegt, zu einer schnellen, heftigen Einfederung des Fahrzeugrades 1, so wird der Schwingungsdämpfer 11 aktiv. Es sei angenommen, dass das gezeigte Abdeckelement in der vertikalen oberen Radposition angeordnet ist, d. h., dass die Schwenkachse 5 vertikal zur Fahrbahn verläuft. Die schnelle Radeinfederung führt folglich zu einer Beschleunigungskraft in Richtung der Fahrbahn, d. h., dass diese Kraft das Abdeckelement 4 in Richtung des Felgeninneren drückt. Diese Kraft ist infolge des starken Einfederns sehr groß, d. h. die Beschleunigung des Abdeckelements ist beachtlich. Diese Kraft respektive Beschleunigung "zieht" nun den Zylinder 18 nebst Abdeckelement 4 zum Felgeninneren, mithin also den Zylinder 18 vom Kolben 19 weg. Um dieser schnellen Bewegung folgen zu können, müsste das Hydraulikfluid oder das Gas ebenfalls sehr schnell vom einen Zylinderraum in den anderen strömen. Dies ist jedoch, der Funktion eines Schwingungsdämpfers entsprechend, gerade nicht der Fall, vielmehr ist die Fluid- oder Gasbewegung sehr langsam, woraus die Dämpfungseigenschaft resultiert. D. h., dass trotz der momentan gegebenen, zum Teil extrem hohen Kraft respektive starken Beschleunigung zum Felgeninneren hin das System nicht folgen kann, da das Hydraulikfluid oder das Gas nicht so schnell nachströmen kann. Die Beschleunigung bzw. die daraus resultierende Bewegungsenergie wird in Wärmeenergie, die das Fluid oder das Gas erwärmt, umgewandelt. Eine nennenswerte Bewegung des Abdeckelements 4 ist deshalb unterbunden. Die Beschleunigung wirkt üblicherweise auch nur sehr kurzzeitig auf das Abdeckelement 4 ein, so dass es letztlich zu keiner Abdeckelementbewegung kommt, da der erfindungsgemäß integrierte Schwingungsdämpfer 11 diese bedämpft respektive unterbinden. Langsame Bewegungen jedoch sind, wie oben im Rahmen der Erläuterung der reinen rotationsbedingten Bewegungen nach außen bzw. nach innen, trotz Integration des Schwingungsdämpfers möglich, Beschleunigungsspitzen jedoch, wie sie aus schnellen Vertikaleinfederungen des Rades beispielsweise beim Fahren über unebene Fahrbahnen, Schlaglöcher, Schotterstrecken und Ähnliches auftreten, werden jedoch insoweit bedämpft, dass die Abdeckelemente 4 ihre jeweilige Position beibehalten.

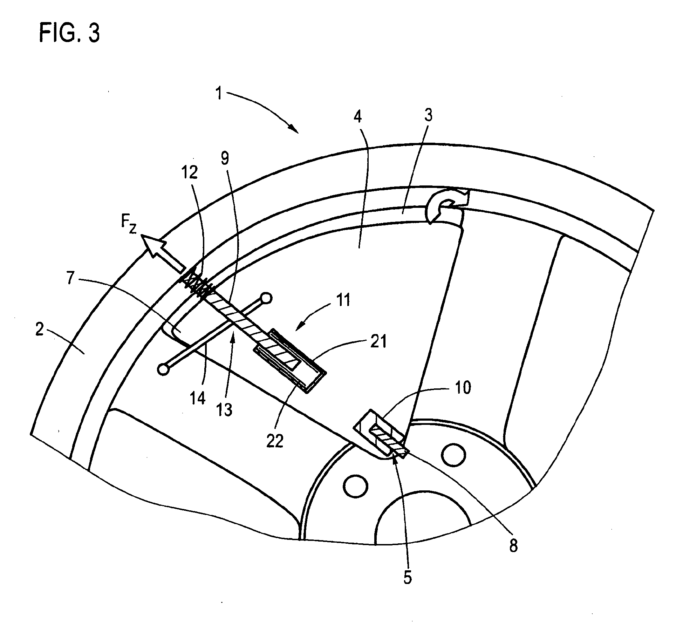

Fig. 3 zeigt ein im Aufbau dem aus den Fig. 1 und 2 bekannten Fahrzeugrad entsprechendes weiteres erfindungsgemäßes Fahrzeugrad 1 umfassend eine Felge 2 mit Durchbrechungen 3 und diese abdeckenden Abdeckelementen 4, wobei auch hier nur eines gezeigt ist. Dieses (wie natürlich auch die anderen, nicht gezeigten) ist ebenfalls um die Schwenkachse 5 schwenkbeweglich, wobei die Schwenklagerung über die Schwenkachsstäbe 8, 9 realisiert ist. Der Schwenkachsstab 8 greift auch hier in eine abdeckelementseitige Halterung 10 ein. Die zweite Lagerstelle wird auch hier wieder über einen Schwingungsdämpfer 11 realisiert, wobei hier als ein solcher ein Reibungsdämpfer verwendet ist, dessen Aufbau und Funktion nachfolgend erläutert wird. Die grundsätzliche Funktion und Bewegung der Abdeckelemente entspricht der obigen Beschreibung.

Der Schwingungsdämpfer umfasst eine am Abdeckelement befestigte hohlzylindrische Halterung 21, in die der Schwenkachsstab 9 eingreift. Bei einer Bewegung des Abdeckelements 4 relativ zur Felge und damit relativ zum felgenseitig festliegenden Schwenkachsstab 9 bewegt sich der Schwenkachsstab 9 in die und aus der Halterung 21. An der Innenseite der Halterung 21 ist ein Reibbelag 22 aufgebracht. Alternativ oder zusätzlich kann ein solcher auch außenseitig auf dem Schwenkachsstab 9 aufgebracht sein. Der Schwenkachsstab 9 läuft nun auf diesem Reibbelag, so dass es bei einer Relativbewegung zu Reibung und damit einer Energieumwandlung kommt. Hierüber erfolgt die Dämpfung der Schwingung. Anstelle der gezeigten Anordnung mit einem Reibungsdämpfer, der mit dem Schwenkachsstab zusammenwirkt, ist es auch denkbar, den Schwingungsdämpfer mit dem Koppelelement 13 zu verbinden.

Anstelle des in den Figuren beschriebenen Kolben-Zylinder-Dämpfers ist es auch denkbar, beispielsweise Drehschwingungsdämpfer zu verwenden. Diese beruhen ebenfalls auf einem Verdrängungsprinzip, jedoch nicht durch eine axiale Bewegung, sondern durch eine Rotationsbewegung. Die Wirkung ist jedoch die gleiche.

Die Verwendung der erfindungsgemäß integrierten Schwingungsdämpfer ist jedoch nicht nur dann zweckmäßig, wenn fahrbahnbedingt große Beschleunigungen auf das Rad respektive die Abdeckelemente wirken. Sie ist auch dann zweckmäßig, wenn sich beispielsweise die Abdeckelemente zentripetalkraftbedingt gerade in die radial äußere Schließstellung bewegt haben, wenn also die Zentripetalkraft gerade geeignet ist, das Federelement 12 zu überbrücken. Hierbei wurde zuvor der Schwingungsdämpfer 17 ebenfalls insoweit "betätigt", als er diese Bewegung, wenngleich gegebenenfalls etwas verzögert, zugelassen hat. Die Abdeckelemente 4 befinden sich jedoch, da die Zentripetalkraft nicht allzu groß ist, noch nicht in einem stabilen Zustand. Vielmehr können geringe Fahrgeschwindigkeitsänderungen dazu führen, dass die Zentripetalkraft wieder etwas abnimmt und die komprimierten Federelemente die Abdeckelemente wieder nach innen zurückdrängen. Dies wird jedoch über die integrierten Schwingungsdämpfer insoweit unterbunden, als diese Rückstellbewegung, wenn überhaupt, nur stark verzögert erfolgt. D. h., dass in solchen quasi instabilen Momenten ein kurzzeitiger Abfall der Zentripetalkraft nicht sofort dazu führt, dass die Abdeckelemente 4 in die Schließstellung bewegt werden, dem wirken die Schwingungsdämpfer entgegen. Eine kurzzeitige Änderung der Zentripetalkraft wird also auch hier über die Schwingungsdämpfer ausgeglichen, dergestalt, dass die Abdeckelemente in ihrer äußeren Position verbleiben. Erst dann, wenn die Zentripetalkraft längerfristig niedrig bleibt und die Federelemente selbige überdrücken können, wandern die Abdeckelemente 4 langsam nach innen.

## Patentansprüche

1. Fahrzeugrad umfassend eine Felge (2), an der mehrere um eine Schwenkachse (5) schwenkbar gelagerte plattenförmige Abdeckelemente (4) zum temporären Verschließen zugeordneter felgenseitiger Durchbrechungen vorgesehen sind, wobei jedes Abdeckelement (4) fliehkraftbedingt längs der Schwenkachse (5) gegen die Kraft eines Rückstellelements (12) verschiebbar und mit der Felge (2) über ein bei einer Verschiebebewegung zwangsführendes Koppelelement (13) verbunden ist, derart, dass das Abdeckelement (4) zwischen einer radial inneren Offenstellung und einer radial äußeren Schließstellung verschwenkbar ist,
**dadurch gekennzeichnet,**
**dass** ein felgenaußenseitig angeordneter Schwenkachsstab (9) über einen hydraulischen, pneumatischen oder reibungswirkenden Schwingungsdämpfer (17) mit dem Abdeckelement (4) verbunden ist.

2. Fahrzeugrad nach Anspruch 1,
**dadurch gekennzeichnet,**
**dass** der Schwingungsdämpfer (4) ein Kolben-Zylinder-Dämpfer ist.

3. Fahrzeugrad nach Anspruch 2,
**dadurch gekennzeichnet,**
**dass** der Schwenkachsstab (9) mit dem Kolben (19) verbunden ist.

4. Fahrzeugrad nach Anspruch 1,
**dadurch gekennzeichnet,**
**dass** der Schwingungsdämpfer (17) ein Drehdämpfer ist.

5. Fahrzeugrad nach Anspruch 4,
**dadurch gekennzeichnet,**
**dass** der Schwenkachsstab (9) mit dem Drehkörper des Drehdämpfers verbunden ist.

6. Fahrzeugrad nach einem der vorangehenden Ansprüche,
**dadurch gekennzeichnet,**
**dass** bei Verwendung eines reibungswirkenden Schwingungsdämpfers (11) an einem felgenseitig und/oder abdeckelementseitig vorgesehnen Dämpferbauteil, insbesondere einem abdeckelementseitig angeordneten Zylinder und/oder dem felgenseitig angeordneten Schwenkachsstab ein Reibbelag (22) vorgesehen ist.

## Claims

1. Vehicle wheel comprising a rim (2) on which a plurality of plate-shaped cover elements (4) pivotally mounted about a pivot axis (5) are provided for temporarily closing associated rim-side openings, each cover element (4) being displaceable, due to centrifugal force, along the pivot axis (5) against the force of a restoring element (12) and being connected to the rim (2) by a coupling element (13) which is guided positively upon a displacement movement such that the cover element (4) can be pivoted between a radially inner open position and a radially outer closed position, **characterised in that** a pivot axis rod (9) arranged on the outside of the rim is connected to the cover element (4) via a hydraulic, pneumatic or frictional vibration damper (17).

2. Vehicle wheel according to claim 1, **characterised in that** the vibration damper (4) is a piston-cylinder damper.

3. Vehicle wheel according to claim 2, **characterised in that** the pivot axis rod (9) is connected to the piston (19).

4. Vehicle wheel according to claim 1, **characterised in that** the vibration damper (17) is a rotary damper.

5. Vehicle wheel according to claim 4, **characterised in that** the pivot axis rod (9) is connected to the rotary body of the rotary damper.

6. Vehicle wheel according to any of the preceding claims, **characterised in that**, when a frictional vibration damper (11) is used, a friction lining (22) is provided on a damper component provided on the rim side and/or the cover element side, in particular on a cylinder arranged on the cover element side and/or the pivot axis rod arranged on the rim side.

## Revendications

1. Roue de véhicule, comprenant une jante (2) sur laquelle sont prévus plusieurs éléments de couverture (4) en forme de plaque supportés en pivotement autour d'un axe de pivotement (5) pour fermer temporairement des traversées attribuées côté jante, chaque élément de couverture (4) pouvant, sous l'action de la force centrifuge, coulisser le long de l'axe de pivotement (5) contre la force d'un élément de rappel (12) et étant raccordé à la jante (2) par le biais d'un élément d'accouplement (13) à guidage forcé lors d'un mouvement de coulissement, de telle sorte que l'élément de couverture (4) peut pivoter entre une position d'ouverture radialement intérieure et une position de fermeture radialement extérieure,
**caractérisée en ce**
**qu'**une tige (9) d'axe de pivotement disposée côté extérieur de la jante est raccordée à l'élément de couverture (4) par le biais d'un amortisseur de vibrations (17) hydraulique, pneumatique ou agissant par friction.

2. Roue de véhicule selon la revendication 1,
**caractérisée en ce que**
l'amortisseur de vibrations (4) est un amortisseur à piston-cylindre.

3. Roue de véhicule selon la revendication 2,
**caractérisée en ce que**
la tige (9) d'axe de pivotement est raccordée au piston (19).

4. Roue de véhicule selon la revendication 1,
**caractérisée en ce que**
l'amortisseur de vibrations (17) est un amortisseur rotatif.

5. Roue de véhicule selon la revendication 4,
**caractérisée en ce que**
la tige (9) d'axe de pivotement est raccordée au corps rotatif de l'amortisseur rotatif.

6. Roue de véhicule selon une des revendications précédentes,
**caractérisée en ce que**,
lors de l'utilisation d'un amortisseur de vibrations (11) agissant par friction sur un composant d'amortisseur prévu côté jante et/ou côté élément de couverture, en particulier sur un cylindre disposé côté élément de couverture et/ou sur la tige d'axe de pivotement disposée côté jante, il est prévu une garniture de frottement (22).
